# EUROPEAN PATENT APPLICATION

(11) **EP 4 546 252 A1**
(43) Date of publication of application: **30.04.2025**
(21) Application number: 24207917.6
(22) Date of filing: 21.10.2024
(51) Int. Cl.: G06T 5/73

(54) **METHOD AND DEVICE WITH IMAGE ENHANCEMENT BASED ON BLUR SEGMENTATION**

(30) Priority: 27.10.2023 KR 20230145879; 30.01.2024 KR 20240014083
(71) Applicant: Samsung Electronics Co., Ltd, Suwon-si, Gyeonggi-do 16677 (KR)
(72) Inventor: KIM, Insoo, 16678 Gyeonggi-do (KR); SEO, Geonseok, 16678 Gyeonggi-do (KR); CHOI, Jae Seok, 16678 Gyeonggi-do (KR); LEE, Hyong euk, 16678 Gyeonggi-do (KR)
(74) Representative: Arnold & Siedsma

(57) **Abstract**

A method and device for image enhancement based on blur segmentation are provided. The method of image enhancement includes: generating a blur segmentation map including indications of blur characteristics of respective pixels of a blur image, wherein the blur characteristics are in predetermined blur characteristic categories, and wherein the generating is performed by classifying the blur characteristic of each pixel of the blur image into one of the predetermined blur characteristic categories; converting the blur segmentation map into an image residual error corresponding to a blur component of the blur image; and generating the deblurred image based on the blur image and the image residual error.

## Description

### BACKGROUND

### 1. Field

The following description relates to a method of image enhancement, and to an electronic device.

### 2. Description of Related Art

Deep learning-based neural networks are often used for different kinds of image processing. A neural network may be trained based on deep learning, and then perform inference for the desired purpose by mapping input data and output data that are in a nonlinear relationship to each other. Such a trained capability of generating the mapping may be referred to as a learning ability of the neural network. A neural network trained for a special purpose such as image enhancement may have a general ability to generate a relatively accurate output in response to an input pattern for which it is not been specifically trained.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method of enhancing an image includes: generating a blur segmentation map including indications of blur characteristics of respective pixels of a blur image, wherein the blur characteristics are in predetermined blur characteristic categories, and wherein the generating is performed by classifying the blur characteristic of each pixel of the blur image into one of the predetermined blur characteristic categories; converting the blur segmentation map into an image residual error corresponding to a blur component of the blur image; and generating a deblurred image based on the blur image and the image residual error.

The indications may be feature representations and each feature representation may represent the blur characteristic of a corresponding pixel of the blur image.

The feature representations may form pairs with positionally corresponding pixels of the blur image, and a first pair of the pairs may include a first feature representation of the feature representations and a first pixel of the pixels, and the first feature representation may represent a blur characteristic of the first pixel.

The image residual error may be generated by performing a discrete-to-continuous conversion on the blur segmentation map based on the blur characteristic categories, and the image residual error may include pixel values in a continuous format.

The blur segmentation map may be generated using a first neural model pre-trained to segment input blur images based on clustering of blur characteristics of the input blur images, and the blur segmentation map may be converted into the image residual error using a second neural network that is pre-trained to convert segmentation maps into images with continuous pixel values.

The converting of the blur segmentation map into the image residual error may include inputting the blur image and the blur segmentation map into the second neural network.

The first neural network model may be trained based on: generating basis kernels of a first training blur image using a neural kernel estimation model; generating first intermediate deconvolution results by performing deconvolution of the first training blur image using the basis kernels; generating a first training blur segmentation map of the first sample blur image using the first neural network model; generating a first final deconvolution result by sampling pixels of the first final deconvolution result from the first intermediate deconvolution results using feature representations of the first sample blur segmentation map; and training the first neural network model and the second neural network model such that a difference between the first final deconvolution result and a first training sharp image is reduced.

The number of the basis kernels is set to be the same as the number of the predetermined blur characteristic categories.

The generating of the first final deconvolution result may include: based on a feature representation at a first position among the feature representations of the first training blur segmentation map, determining a pixel value at a position of the first final deconvolution result corresponding to the first position by selecting one of pixel values at a position of the first intermediate deconvolution results corresponding to the first position.

The second neural network model may be trained based on: generating a second training blur segmentation map of a second training blur image using the first neural network model after the training of the first neural network model is completed; converting the second training blur segmentation map into a training image residual error corresponding to a difference between the second training blur image and a second training deblurred image using the second neural network model; generating the second training deblurred image based on the second training blur image and the training image residual error; and training the second neural network model such that a difference between the second training deblurred image and a second training sharp image is reduced.

The training of the second neural network model may include repeatedly updating weights of the second neural network model while no weights of the first neural network model are updated.

In another general aspect, an electronic device includes: one or more processors; and a memory storing instructions configured to cause the one or more processors to: generate a blur segmentation map from a blur image by classifying blur characteristics of pixels of the blur image into predetermined blur characteristic categories and storing, in the blur segmentation map, indications of the determined blur characteristic categories of the respective pixels of the blur image; generate an image residual error based on the blur segmentation map, the image residual error corresponding to a blur component of the blur image; and generate a deblurred image by applying the image residual error to the blur image to remove the blur component of the blur image.

The pixels of the blur image may each have a frequency component and a motion component, and the predetermined blur characteristic categories may correspond to respective clusters of the pixels in a frequency-motion domain.

Which predetermined blur characteristic category a pixel of the blur image is classified into depends on a motion component of the pixel and a blur component of the pixel.

The blur segmentation map may be a discretization of frequency-motion values of pixel values in the blur image.

The instructions may be further configured to cause the one or more processors to: generate the blur segmentation map by inputting the blur image to a first neural network model that has been pre-trained to cluster pixels of the blur image according to frequency and motion components thereof, the first neural network model generating the blur segmentation map; and generate the image residual error by inputting the blur segmentation map to a second neural network model that has been pre-trained to convert segmentation maps of blur images into non-segmented image residual errors.

The first neural network model may be trained based on: generating basis kernels of a first training blur image using a third neural model trailed to estimate blur kernels of blur images; generating first intermediate deconvolution results by performing deconvolution of the first training blur image using the basis kernels; generating a first training blur segmentation map of the first training blur image using the first neural network model; generating a first final deconvolution result by sampling pixels of the first final deconvolution result from the first intermediate deconvolution results using frequency-motion feature indications of the first training blur segmentation map; and training the first neural network model and the third neural network model such that a difference between the first final deconvolution result and a first training sharp image is reduced.

The basis kernels may respectively correspond to the predetermined blur characteristic categories.

In another general aspect, a method of generating a deblurred image from a blur image is performed by one or more processors and the method includes: determining frequency-motion blur categories of pixels of the blur image according to frequency-motion blur components of the pixels of the blur image and storing indications of the determined frequency-motion blur categories in a blur segmentation map, wherein each indication in the blur segmentation map indicates the determined frequency-motion blur category of its positionally-corresponding pixel in the blur image; and generating the deblurred image based on the blur segmentation map.

The frequency-motion blur categories may be in a frequency-motion domain of the blur image, wherein the frequency-motion blur categories correspond to clusters of the pixels of the blur image in the frequency-motion domain, and the method may further include generating an image residual error corresponding to a blur component of the blur image and applying the image residual error to the blur image to generate the deblurred image.

Other features and aspects will be apparent from the following detailed description, the drawings, and the claims.

### BRIEF DESCRIPTION OF THE DRAWINGS

FIG. 1 illustrates an example an image enhancement model, according to one or more embodiments.
FIG. 2 illustrates example blur characteristics of blur cases, according to one or more embodiments.
FIG. 3 illustrates an example of clustering discretized blur characteristics of pixels of a blur image to derive a blur segmentation map, according to one or more embodiments.
FIG. 4 illustrates an example of deriving a blur segmentation map and an image residual error using a mixed method, according to one or more embodiments.
FIG. 5 illustrates an example blur segmentation map and image residual error, according to one or more embodiments.
FIG. 6 illustrates an example training process of a neural clustering model and a neural kernel estimation model, according to one or more embodiments.
FIG. 7 illustrates an example neural converting model, according to one or more embodiments.
FIG. 8 illustrates an example image enhancement method, according to one or more embodiments.
FIG. 9 illustrates an example electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

Embodiments of the present disclosure may provide an efficient deblurring model for practical usage. Furthermore, in embodiments of the present disclosure, the use of a blur segmentation map may help reconstruct more natural deblurred results than existing methods, like kernel-free methods, without the need for any physical blur information.

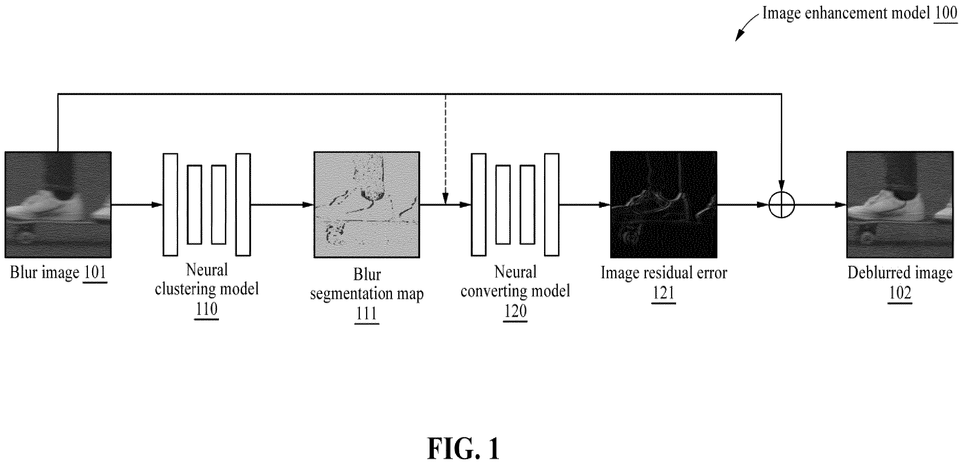

seeFIG. 1 illustrates an example image enhancement model, according to one or more embodiments. Referring to FIG. 1, an image enhancement model 100 may include a neural clustering model 110 and a neural converting model 120. The image enhancement performed by the image enhancement model 100 may include deblurring an input image. For such a task, the input image is usually referred to as a blur image 101. When the image enhancement model 100 is applied to the blur image 101, the result may be a deblurred image 102.

The image enhancement task, or deblurring, may be performed by an image enhancement model 100. The image enhancement model 100 may also be referred to as a deblurring model. The image enhancement model 100 may be executed by one or more processors of an electronic device. However, the image enhancement task performed by the image enhancement model 100 is merely an example, and examples are not limited thereto. For example, the image enhancement task may be performed by the one or more processors of the electronic device without the image enhancement model 100.

The image enhancement model 100 may generate a blur segmentation map 111 representing blur characteristics of respective pixels of the blur image 101. The blur segmentation map 111 may be generated by classifying each of the blur characteristics of the pixels of the blur image 101 into one of predetermined blur characteristic categories. There may be a predetermined number of blur characteristic categories, and the blur characteristic of each pixel of the blur image 101 may be classified into one of the blur characteristic categories. For example, there may be a first, second and third blur characteristic category, and the blur characteristic of each pixel of the blur image 101 may be determined as one of the first blur characteristic category, the second blur characteristic category, and the third blur characteristic category; the number of blur characteristic categories is not limited. categories.

The blur segmentation map 111 may include information about a blur class of each pixel of the blur image 101. The blur class of each pixel may correspond to one of the blur characteristic categories as determined by the image enhancement model 100. To understand the terminology, a blur class is the equivalent of a blur characteristic category, but in a certain form in the blur segmentation map 111. The blur segmentation map 111 may include feature representations for representing blur characteristics of pixels of the blur image 101. The pixels of the blur image 101 and the feature representations of the blur segmentation map 111 may form respective corresponding pairs (e.g., may correspond to each other, positionally, on a one-to-one basis). That is to say, each of the pairs may have a position-based correspondence relationship (the pixel and feature representation in each pair may have the same position in their respective image/map). For example, a first pixel at a first position of the blur image 101 and a first feature representation at a same position in the blur segmentation map 111 may form a first pair. The first feature representation of the first pair may show/represent a blur characteristic of the first pixel of the first pair.

For example, each feature representation may be a one-hot vector. Among the vector elements of a one-hot vector, one element whose value is 1 corresponds to (e.g., identifies) the blur characteristic of the corresponding blur image pixel, and the other elements of the vector, whose values are 0, indicate blur characteristics that the first pixel lacks. Referring to the previous example of the first pair of the first pixel and the first feature representation, when the first pixel of the first pair has a blur characteristic that is the first blur characteristic category, the first feature representation may represent that with a vector element with a value of 1 to represent the first blur characteristic, and the other vector elements having a value of 0 to indicate lack of the first and second blur characteristic categories. The one-hot vector is merely an example, and the feature representation may have other formats that may selectively represent one of the blur characteristic categories according to the blur characteristics of the pixels of the blur image 101.

The image enhancement model 100 may generate the blur segmentation map 111 corresponding to the blur image 101 using the neural clustering model 110. The neural clustering model 110 may be pre-trained to generate blur segmentation maps representing blur characteristics of pixels of blur images inputted thereto by, for a given input blur image, classifying the blur characteristic of each pixel into one of the predetermined blur characteristic categories. Training of the image enhancement model 100 is discussed below.

Based on the generated blur segmentation map 111, the image enhancement model 100 may convert/transform the blur segmentation map 111 into an image residual error 121, which corresponds to a difference between the blur image 101 and the deblurred image 102. The image residual error 121 is a kind of information/image commonly derived for deblurring (albeit by techniques described herein). The blur segmentation map 111 represents information loss of the blur image 101 (information lost due to blur when the blur image was captured). The image enhancement model 100 may fuse the blur image 101 and the blur segmentation map 111 and apply the neural converting model 120 to their fusion to generate the image residual error 121.

A difference between the blur image 101 and the deblurred image 102 may correspond to a blur component of the blur image 101. The image residual error 121 may represent such a blur component. The blur segmentation map 111 may also reflect the blur component, but may reflect other blur-related information of the blur image, namely, by representing blur characteristics of the pixels of the blur image 101 through the feature representations (discussed above). In other words, the feature representations may represent a type of blur information related to the blur component of the blur image 101. Since the blur image 101 and the deblurred image 102 each have a continuous format (i.e., are not segmented), the image residual error 121 may have a continuous format. Since the number of blur characteristic categories may be predetermined (e.g.,. three), the blur segmentation map 111 has a discrete format in that it that selectively/categorically represents the blur characteristic categories. The blur segmentation map 111 may represent pixel values of the image residual error 121 (which are in a continuous/non-segmented format) in a discrete format based on the blur characteristic categories.

The image enhancement model 100 may generate the image residual error 121 using the neural converting model 120. As described above, the blur segmentation map 111 may have a discrete format (discretized blur information), and the image residual error 121 may have a continuous format. The blur segmentation map 111 may be considered as a discrete version of the image residual error 121, and, conversely, the image residual error 121 may be considered as a continuous version of the blur segmentation map 111. The image residual error 121 may represent, in continuous format, feature representations in the discrete format of the blur segmentation map 111 (which are based on the blur characteristic categories as pixel values).

Since information loss of the blur image 101 may be represented in the form of the blur segmentation map 111 (e.g., inferred based on the blur image 101), the blur segmentation map 111 may be converted into the image residual error 121 by executing the neural converting model 120 with input data including the blur image 101 and the blur segmentation map 111. For example, the input data may be a concatenation of the blur segmentation map 111 with the blur image 101.

The image residual error 121 may represent a blur component of the blur image 101 in a continuous format. As noted, the blur segmentation map 111 may represent the blur component of the blur image 101 in a discrete format using the blur characteristic categories. The conversion of the blur segmentation map 111 into the image residual error 121 may correspond to the conversion of the blur segmentation map 111 in the discrete format into the image residual error 121 in the continuous format. The conversion may thus be referred to as a discrete-to-continuous (D2C) conversion. The neural converting model 120 may perform the D2C conversion. The neural converting model 120 may be pre-trained to convert blur segmentation maps into image residual errors corresponding to a differences between blur images and deblurred images.

The image enhancement model 100 may generate a deblurred image 102 based on the blur image 101 and the image residual error 121. For example, the blur image 101 and the image residual error 121 may be fused by an elementwise (e.g., pixelwise) addition operation to generate the deblurred image 102. The deblurred image 102 may be the result of the image enhancement task (e.g., deblurring) on the blur image 101. The deblurred image 102 may be a sharpened version of the blur image 101 that does not include the blur component of the blur image 101.

The neural clustering model 110 and/or the neural converting model 120 may each include/be a neural network. Such neural networks may include/be a deep neural network (DNN) including multiple layers. The layers may include an input layer, at least one hidden layer, and an output layer. Each layer may include nodes with connections to another (e.g., adjacent) layer, and the connections may have trained/learned weights.

The DNN may include at least one of a fully connected network (FCN), a convolutional neural network (CNN), and/or a recurrent neural network (RNN), to name some non-limiting examples. For example, at least some of the layers included in the neural network may correspond to the CNN, and others may correspond to the FCN. The CNN may be referred to as a convolutional layer, and the FCN may be referred to as a fully connected layer.

In the case of the CNN, data input to each layer may be referred to as an input feature map, and data output from each layer may be referred to as an output feature map. The input feature map and the output feature map may also be referred to as activation data. When a convolutional layer corresponds to an input layer, an input feature map thereof may be an image (e.g., the blur image 101, the blur segmentation map 111, etc.).

Neural network(s) of the image enhancement model 100 may be trained based on deep learning and perform inference suitable for a training purpose by mapping input data and output data that are in a nonlinear relationship to each other. Deep learning is a machine learning technique for solving a problem such as image or speech recognition from a big data set. Deep learning may be construed as an optimization problem solving process of finding a point at which energy is minimized while training a neural network using prepared training data.

Through supervised or unsupervised learning of deep learning, a structure of the neural network or a weight corresponding to a model may be obtained, and the input data and the output data may be mapped to each other through the weight. When a width and a depth of the neural network are sufficient, the neural network may have a capacity sufficient to implement a predetermined function. The neural network may achieve an optimized performance by learning a sufficiently large amount of training data through an appropriate training process.

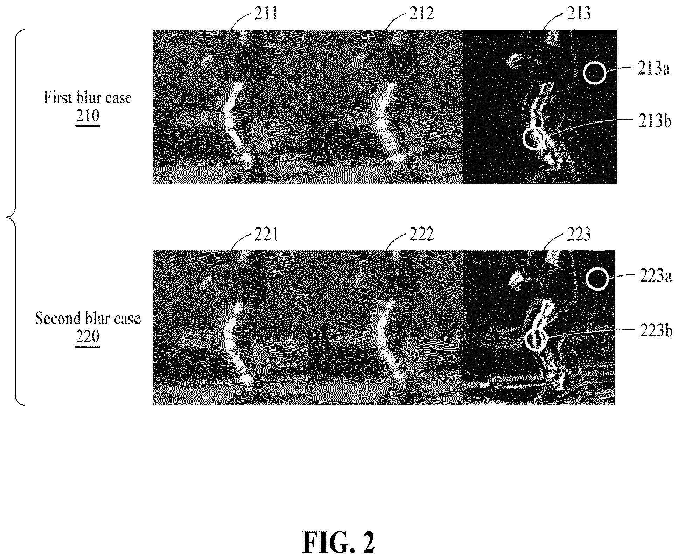

Preliminary to discussion of FIG. 2, consider that an image may have a frequency domain/dimension as well as a motion domain/dimension. That is, pixels of the image may each have varying values in both domains/dimensions. Regarding the frequency domain, generally, higher frequency parts of an image correspond to higher levels of information, e.g., higher levels of texture, a higher incidence of features such as edges, and so forth. Lower frequency parts may be relatively more uniform, smooth, and/or lacking in features. An image may have both blur-related features as well as frequency-related features. Each pixel of an image (e.g., a blur image) may be quantified or characterized in terms of a motion component and a frequency component. Some pixels may have higher frequency and lower motion, others may have higher motion and lower frequency, and so forth. The blur characteristic categories discussed above may include, for example, categories related to different combinations motion and frequency. For example, a first blur characteristic category may correspond to high frequency and low motion, a second blur characteristic category may correspond to motion and high frequency, and a third blur characteristic category may correspond to low motion and low frequency. Pixels of a blur image may be classified into these categories in correspondence with degrees of their motion and frequency components. FIG. 2 shows examples to aid understanding of the motion and frequency domains.

FIG. 2 illustrates blur characteristics of example blur cases, according to one or more embodiments. Referring to FIG. 2, an image residual error 213 of a first blur case 210 may include (i) a non-motion region 213a that has pixel values reflecting (e.g., low magnitude (dim)) the relatively small blur/motion of a positionally-corresponding region of the first blur case 210 and (ii) a motion region 213b that has pixel values reflecting (e.g., high magnitude (bright)) the relatively high blur/motion of a positionally-corresponding region of the first blur case 210. An image residual error 223 of a second blur case 220 may include (i) a low-frequency region 223a with pixel values reflecting (e.g., low magnitude) the relatively low frequency of a positionally-corresponding region of the second blur case 220 and (ii) a high-frequency region 223b that has pixel values reflecting (e.g., high magnitude) the high frequency of a positionally-corresponding region of the second blur case 220. The image residual error 213 may correspond to a difference between a sharp image 211 of the first blur case 210 and a blur image 212 of the first blur case 210. The image residual error 223 may correspond to a difference between a sharp image 221 of the second blur case 220 and a blur image 222 of the second blur case 220.

The blur image 212 of the first blur case 210 may include a local motion (a motion component in a local/limited region, e.g., a moving leg). The motion region 213b may be a region affected by the local motion, and the non-motion region 213a may be a region not affected by the local motion. A difference between the motion region 213b and a corresponding region of the sharp image 211 may be larger than a difference between the non-motion region 213a and a corresponding region of the sharp image 211. An image residual error value of the motion region 213b may be larger than an image residual error value of the non-motion region 213a.

The blur image 222 of the second blur case 220 may include a global motion (e.g., corresponding to camera motion). Both the low-frequency region 223a and the high-frequency region 223b may be affected by the global motion. A distribution of pixel values in the high-frequency region 223b may be relatively non-uniform compared to a distribution of pixel values in the low-frequency region 223a, and a difference between the high-frequency region 223b and a corresponding region of the sharp image 221 may be relatively larger than a difference between the low-frequency region 223a and a corresponding region of the sharp image 211. An image residual error value of the high-frequency region 223b may be larger than an image residual error value of the low-frequency region 223a.

A blur characteristic of a blur image may be determined based on a factor affecting the blurring. For example, the factor affecting the blurring may include a motion type (e.g., motion and non-motion) and a distribution of pixel values of neighboring pixels (e.g., high-frequency or low-frequency). For example, pixels in each of the non-motion region 213a, the motion region 213b, the low-frequency region 223a, and the high-frequency region 223b may correspond to different blur characteristics. The blur characteristic categories may correspond to results of clustering different blur characteristics in both the motion and frequency dimensions/domains.

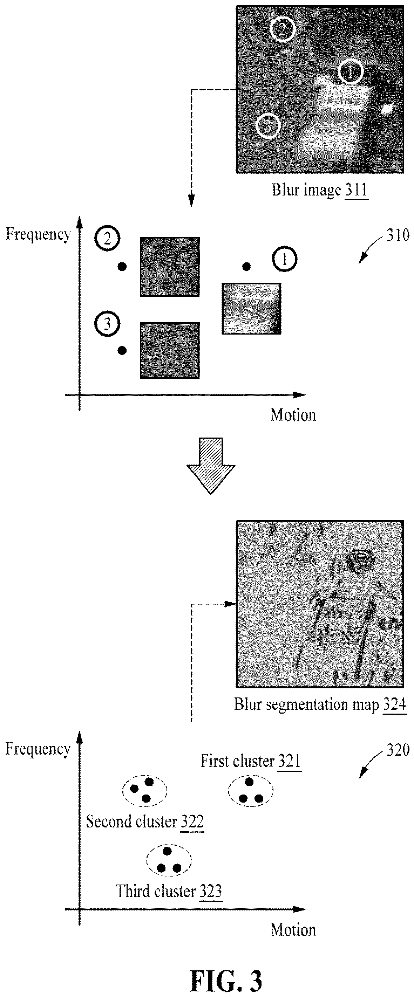

FIG. 3 illustrates an example of clustering discretized blur characteristics of pixels of a blur image to derive a blur segmentation map, according to one or more embodiments. Referring to FIG. 3, graphs 310 and 320 each may show blur characteristics of pixels of a blur image 311 as a function of a motion of the blur image 311 and frequency of local neighborhoods of the pixels of the blur image 311. In each of the graphs 310 and 320, the horizontal axis indicates a motion dimension (e.g., a motion type (motion or non-motion type) according to a motion intensity), and a vertical axis may indicate a frequency dimension (e.g., a high frequency and low frequency).

The graph 310 shows initial blur characteristics of example pixels at positions ①, ②, and 03 of the blur image 311; each pixel of the blur image 311 may have a motion and frequency quantification (e.g., as latent features within a neural network), although FIG. 2 only shows three examples. The graph 320 shows initial discretized blur characteristics of all of the pixels in the graph 310, including the pixel at the positions ①, ②, and ③ of the blur image 311, as well as the other pixels that are not shown in FIG. 3. Referring to the graph 320, the initial blur characteristics may be clustered into clusters 321 to 323. As a result of, for example, applying a clustering algorithm (or network/layer(s)) to the blur characteristics of pixels of the blur image 311, clusters may be formed, including: pixels with motion-frequency values in the first cluster 321, pixels with motion-frequency values in a second cluster 322, and pixels with motion-frequency values in a third cluster 323. The clusters 321 to 323 are merely an example, and examples are not limited thereto.

As shown by the graph 320, in the example, all of the pixels in the graph 310 may be classified to belong to one of the clusters 321 to 323 (or, may be formed into such clusters by clustering on their frequency-motion values/components). The clusters 321 to 323 may define the blur characteristic categories. For example, the first cluster 321 may correspond to the first blur characteristic category, the second cluster 322 may correspond to the second blur characteristic category, and the third cluster 323 may correspond to the third blur characteristic category. Through the clustering, each pixel of the blur image 311 is put in one of the determined clusters, and the cluster that a pixel is clustered into is the blur characteristic category that is set for that pixel.

A blur segmentation map 324 representing the blur characteristic (e.g., the blur characteristic category (cluster)) of each pixel of the blur image 311 may be generated by classifying the blur characteristic of each pixel of the blur image 311 into one of the predetermined blur characteristic categories. For example, a blur characteristic of the pixels belonging to the first cluster 321 may be classified into the first blur characteristic category, a blur characteristic of the pixels belonging to the second cluster 322 may be classified into the second blur characteristic category, and a blur characteristic of the pixels belonging to the third cluster 323 may be classified into the third blur characteristic category.

The blur segmentation map 324 may be generated according to a classification result. Feature representations of the blur segmentation map 324 may selectively represent the clusters 321 to 323 and the blur characteristic categories. For example, each feature representation in the blur segmentation map 324 may correspond to one of a first feature representation of the first cluster 321 and the first blur characteristic candidate, a second feature representation of the second cluster 322 and the second blur characteristic candidate, or a third feature representation of the third cluster 323 and the third blur characteristic candidate.

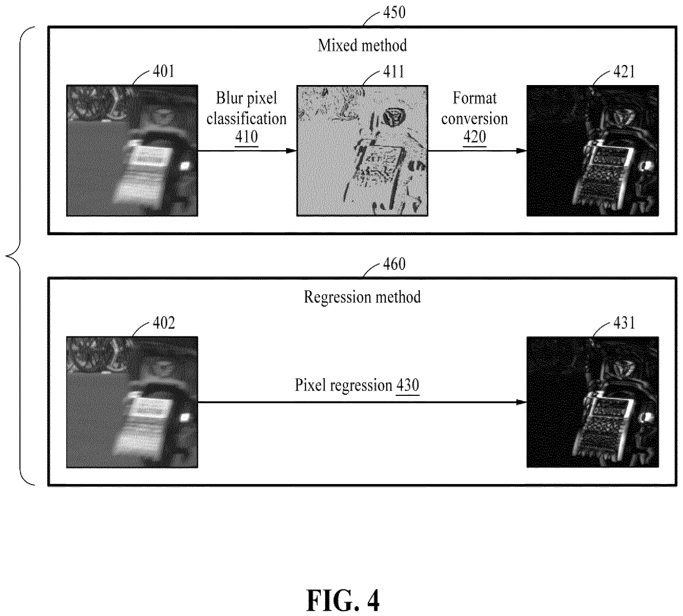

FIG. 4 illustrates an example of deriving a blur segmentation map and an image residual error using a mixed method, according to one or more embodiments. Referring to FIG. 4, a mixed method 450 may include blur pixel classification 410 and format conversion 420. Pixels of a blur image 401 may each be classified into one of the blur characteristic categories according to the blur pixel classification 410 (discretization into motion-frequency categories), and a blur segmentation map 411 may be generated according to a classification result. The blur segmentation map 411, which may be thought of as a discretized image residual error (a set of discrete (categorization) values), may be converted into a continuous-format image residual error 421 where the discrete values of the blur segmentation map 411 have been dispersed into a continuous format (non-discrete) according to the format conversion 420.

A regression method 460 may be used which includes pixel regression 430. An image residual error 431 of a blur image 402 may be generated according to the pixel regression 430. The regression method 460 is set forth as an example to show how the general nature of the image residual error 421 (blur error) is similar to a conventional image residual error 431 from a conventional technique (the regression method 460).

According to examples, the image residual error 421 may be generated using the mixed method 450 rather than the regression method 460. The blur pixel classification 410 may correspond to a classification problem. Compared to the regression method 460 that directly solves a regression problem of the pixel regression 430 to generate the image residual error 431, the mixed method 450 that classifies blur characteristics of the blur image 401 into the blur pixel classification 410, which is then used to generate the blur segmentation map 411. The mixed method 450 then performs the format conversion 420 for the blur segmentation map 411 to generate the image residual error 421, which may generally be a more efficient problem solving method and may be more suitable for remediating large motion blur.

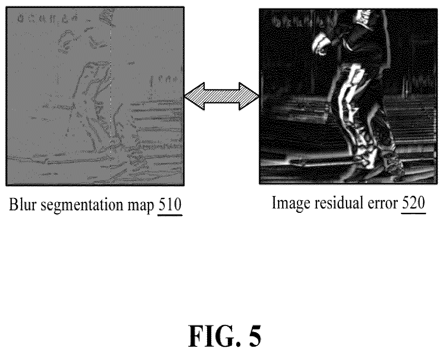

FIG. 5 illustrates an example blur segmentation map and image residual error, according to one or more embodiments. Referring to FIG. 5, a blur segmentation map 510 and an image residual error 520 may have similar shapes. The blur segmentation map 510 may represent pixels in a blur image in a discrete format, and the image residual error 520 may represent a blur component of a blur image in a continuous format. The image residual error 520 may be derived from the blur segmentation map 510 by performing format conversion (e.g., the D2C conversion). The format conversion may disperse or disseminate the values of the blur segmentation map 510. In some examples, this may be done with additional information, namely, the blur image from which the blur segmentation map 510 is derived. That is, the discrete-to-continuous format conversion may be informed by the blur image (or information derived from the blur image). For example, in FIG. 1, see the solid-and-dashed line from the blur image 101 to the neural converting model 120.

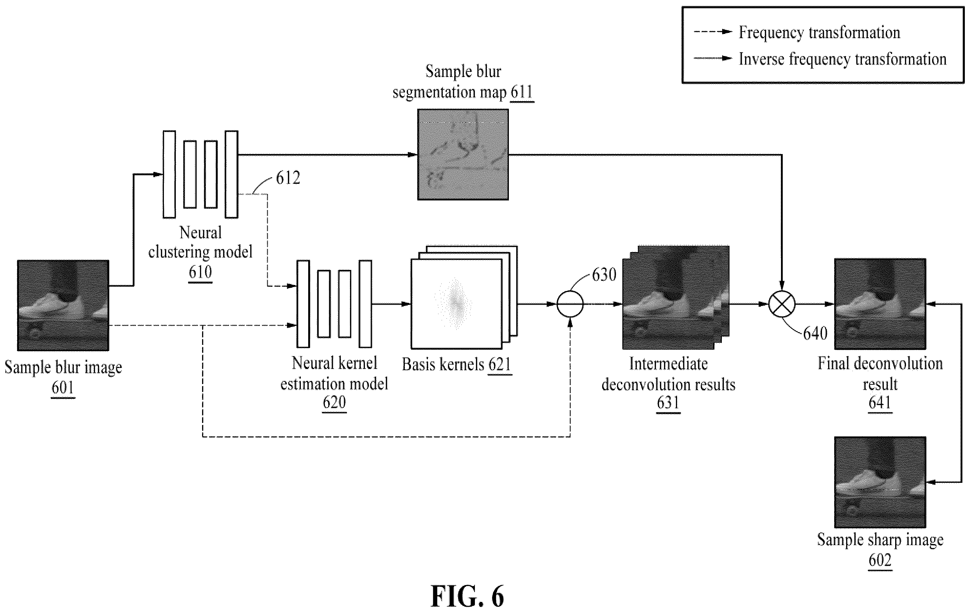

FIG. 6 illustrates an example of training a neural clustering model and a neural kernel estimation model, according to one or more embodiments. Referring to FIG. 6, for a training phase, basis kernels 621 of a sample blur image 601 may be generated using a neural kernel estimation model 620. Intermediate deconvolution results 631 (intermediate deblurred images) may be generated by performing deconvolution on the sample blur image 601 using the basis kernels 621.

Regarding the following description of FIG. 6, to distinguish description of the training phase from description of an inference phase (that is based on the training phase), the term "sample" is added to data of the training phase; such data may be referred to as the *sample* blur image 601, a *sample* blur segmentation map 611, and a *sample* sharp image 602, in contrast to the non-training terms of the inference phase such blur image, blur segmentation map, and sharp image. The training may be performed over a training set with many sample blur images (possibly with multiple epochs) and sample blur image 601 may be just one of the multiple sample blur images. The term "training" may be used in place of "sample", with the same meaning.

The sample blur segmentation map 611 of the sample blur image 601 may be generated using a neural clustering model 610 (which, after training, may serve as the neural clustering model 110 in FIG. 1). The blur segmentation map 611 may consist of feature representations (e.g., motion-frequency blur classifications) that positionally correspond to the pixels of the sample blur image 601. A final deconvolution result 641 may be generated by sampling pixels (for inclusion in the final deconvolution result 641) from the intermediate deconvolution results 631 using feature representations of the sample blur segmentation map 611. For example, based on a feature representation (e.g., a motion-frequency blur classification) at a first position of the feature representations of the sample blur segmentation map 611, a pixel value of the intermediate deconvolution results 631 (at a position therein that corresponds to the first position) may be selected to determine a pixel value of the final deconvolution result 641 (at a position therein that corresponds to the first position).

The neural clustering model 610 may further generate a latent sharp image 612 based on the sample blur image 601. The latent sharp image 612 may correspond to a temporarily generated sharp image and is not to be confused with a sample sharp image 602 (an actual ground truth (GT)). The neural kernel estimation model 620 may generate the basis kernels 621 based on the sample blur image 601 and the latent sharp image 612. The performance of the basis kernels 621 may be improved by using the latent sharp image 612.

The number of basis kernels 621 and the number of intermediate deconvolution results 631 may be set equal to the number of predetermined blur characteristic categories. For example, FIG. 6 shows three basis kernels 621 and three intermediate deconvolution results 631 for three blur characteristic categories; three is a non-limiting example. The basis kernels 621 and the intermediate deconvolution results 631 may respectively correspond to the blur characteristic categories. For example, the basis kernels 621 may include first, second, and third sub-basis kernels respectively corresponding to the first, second, and third blur characteristic categories, and the intermediate deconvolution results 631 may include a first, second, and third sub-intermediate deconvolution results respectively corresponding to the first, second, and third blur characteristic categories. The first, second, and third sub-intermediate deconvolution results 631 may be generated by performing a deconvolution operation 630 on the first, second, and third basis kernels 621.

A sampling operation 640 may be performed on each of the blur characteristic categories represented by each of the feature representations of the sample blur segmentation map 611. For example, when the feature representation at the aforementioned example first position (among the feature representations of the sample blur segmentation map 611) represents/is the first blur characteristic category, the sampling operation 640 may be performed based on the first sub-intermediate deconvolution result generated using the first sub-basis kernel corresponding to the first blur characteristic category. A pixel value of the first sub-intermediate deconvolution result at a position corresponding to the first position may be sampled as the pixel value of the final deconvolution result 641 (at a position corresponding to the first position).

The deconvolution operation 630 may be performed in a frequency domain. For example, a sample blur image in a log frequency domain and a latent sharp image of a log frequency domain may be generated by performing log frequency transform (e.g., logarithmic Fourier transform, logarithmic operation + fast Fourier transform (FFT)) on each of the sample blur image 601 and the latent sharp image 612. The neural kernel estimation model 620 may generate basis kernels in the log frequency domain based on the sample blur image in the log frequency domain and the latent sharp image in the frequency domain. The deconvolution operation 630 may be a subtraction operation of the log frequency domain, and computational load may be reduced as the deconvolution operation 630 is replaced with the subtraction operation. The intermediate deconvolution results 631 may be generated by performing an inverse frequency transformation (e.g., inverse logarithmic Fourier transform, exponential operation + inverse FFT (IFFT)) for an operation result of the subtraction operation. Spatial domain data may be transformed to frequency domain data according to the frequency conversion, and the frequency domain data may be transformed to the spatial domain data according to the inverse frequency transform.

The neural clustering model 610 and the neural kernel estimation model 620 may be trained such that a difference between the final deconvolution result 641 and the sample sharp image 602 is reduced. For example, weights of layers of the relevant models may be adjusted to reduce backpropagated gradient loss (of loss between the final deconvolution result 641 and the sample sharp image 602). The sample sharp image 602 may be a GT image of the image enhancement task (e.g., deblurring). When the latent sharp image 612 is used, the neural clustering model 610 and the neural kernel estimation model 620 may be trained such that the difference between the final deconvolution result 641 and the sample sharp image 602 and a difference between the latent sharp image 612 and the sample sharp image 602 are reduced. As noted above, the neural clustering model 610 and the neural kernel estimation model 620 may be repeatedly trained using other sample blur images and corresponding sample sharp images.

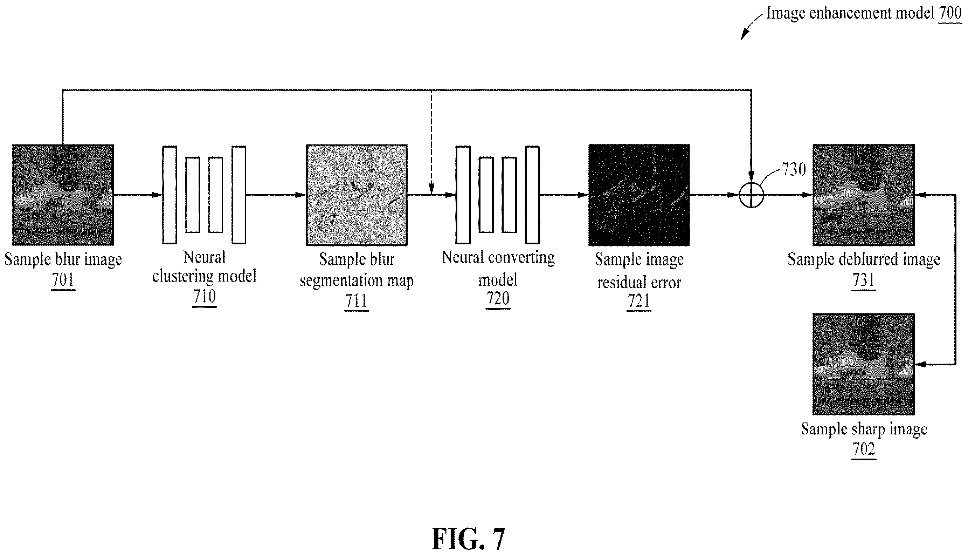

FIG. 7 illustrates an example of a training process of a neural converting model. Referring to FIG. 7, an image enhancement model 700 may include a neural clustering model 710 and a neural converting model 720. The training process of FIG. 7 may be performed after the training process of FIG. 6. When the training of the neural clustering model 710 is completed through the training process of FIG. 6, the neural converting model 720 may be trained through the training process of FIG. 7.

More specifically, when the training of the neural clustering model 710 is completed, a sample blur segmentation map 711 of a sample blur image 701 may be generated using the trained neural clustering model 710. The sample blur image 701, the sample blur segmentation map 711, and the sample sharp image 702 may be the same as or different from the sample blur image 601, the sample blur segmentation map 611, and the sample sharp image 602 of FIG. 6. To distinguish between description of an inference phase and a training phase, the data of the training phase is referred with the preface of "sample", i.e., the *sample* blur image 701, the *sample* blur segmentation map 711, a *sample* image residual error 721, a *sample* deblurred image 731, and the *sample* sharp image 702 may be used in the training phase, in contrast to terms of the inference phase that omit "sample", i.e., a blur image, a blur segmentation map, an image residual error, a deblurred image, and a sharp image.

The sample blur segmentation map 711 may be converted into the sample image residual error 721 (which corresponds to a difference between the sample blur image 701 and the sample deblurred image 731) using the neural converting model 720. Since an information loss of the sample blur image 701 may be generated when generating the sample blur segmentation map 711 based on the sample blur image 701, the sample blur segmentation map 711 may be converted into the sample image residual error 721 by executing/applying the neural converting model 720 with input data including the sample blur image 701 and the sample blur segmentation map 711. For example, the sample blur segmentation map 711 and the sample blur image 701 may be concatenated to form an input to the neural converting model 720.

The sample deblurred image 731 may be generated based on the sample blur image 701 and the sample image residual error 721. For example, the sample blur image 701 and the sample image residual error 721 may be fused by an elementwise (e.g., pixelwise) addition operation 730 to generate the sample deblurred image 731.

The neural converting model 720 may be trained while the neural clustering model 710 is frozen (not updated), such that a difference between the sample deblurred image 731 and the sample sharp image 702 is reduced. The neural converting model 720 may be repeatedly trained using other sample blur images and sample sharp images paired therewith.

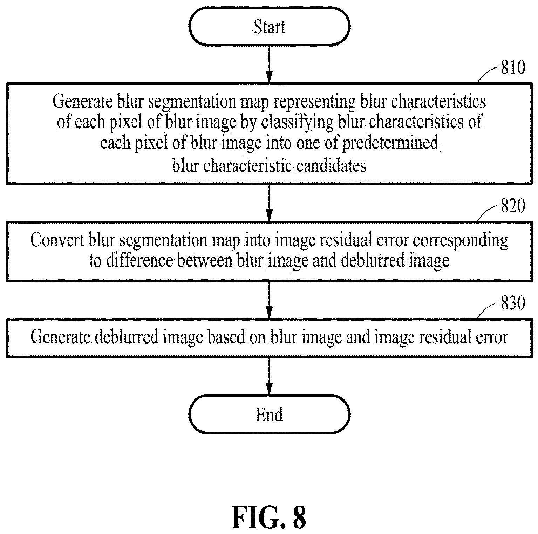

FIG. 8 illustrates an example of an image enhancement method. Referring to FIG. 8, in operation 810, a blur segmentation map representing blur characteristic of each of respective pixels of a blur image may be generated by classifying the blur characteristics of the pixels of the blur image into one of predetermined blur characteristic categories. In operation 820, the blur segmentation map may be converted into an image residual error which may be a difference between the blur image and a deblurred image. In operation 830, the deblurred image may be generated based on the blur image and the image residual error.

The blur segmentation map may include feature representations, and may represent the blur characteristic of each pixel of the blur image using the feature representations.

The feature representations may form pairs with corresponding pixels of the blur image. A first pair may include a first feature representation of the feature representations and a first pixel of the pixels, and the first feature representation may represent a blur characteristic of the first pixel.

The image residual error may represent, as pixel values in a continuous format, feature representations in a discrete format of the blur segmentation map based on the blur characteristic categories.

Operation 810 may include generating the blur segmentation map corresponding to the blur image using a pre-trained neural clustering model, and operation 820 may include converting the blur segmentation map into the image residual error using a pre-trained neural converting model.

Operation 820 may include converting the blur segmentation map into the image residual error by executing the neural converting model with input data including the blur image and the blur segmentation map.

The neural clustering model may be trained based on generating basis kernels of a first sample blur image using a neural kernel estimation model, generating first intermediate deconvolution results by performing deconvolution of the first sample blur image using the basis kernels, generating a first sample blur segmentation map of the first sample blur image using the neural clustering model, generating a first final deconvolution result by sampling pixels of the first final deconvolution result from the first intermediate deconvolution results using feature representations of the first sample blur segmentation map, and training the neural clustering model and the neural kernel estimation model such that a difference between the first final deconvolution result and a first sample sharp image is reduced.

A number of the basis kernels may be set to be the same as a number of the predetermined blur characteristic categories.

The generating of the first final deconvolution result may include, based on a feature representation at a first position among the feature representations of the first sample blur segmentation map, determining a pixel value at a corresponding position of the first position of the first final deconvolution result by selecting one of pixel values at a corresponding position of the first position of the first intermediate deconvolution results.

The neural converting model may be trained based on generating a second sample blur segmentation map of a second sample blur image using the neural clustering model in response to the training of the neural clustering model being completed, converting the second sample blur segmentation map into a sample image residual error corresponding to a difference between the second sample blur image and a second sample deblurred image using the neural converting model, generating the second sample deblurred image based on the second sample blur image and the sample image residual error, and training the neural converting model such that a difference between the second sample deblurred image and a second sample sharp image is reduced while the neural clustering model is frozen.

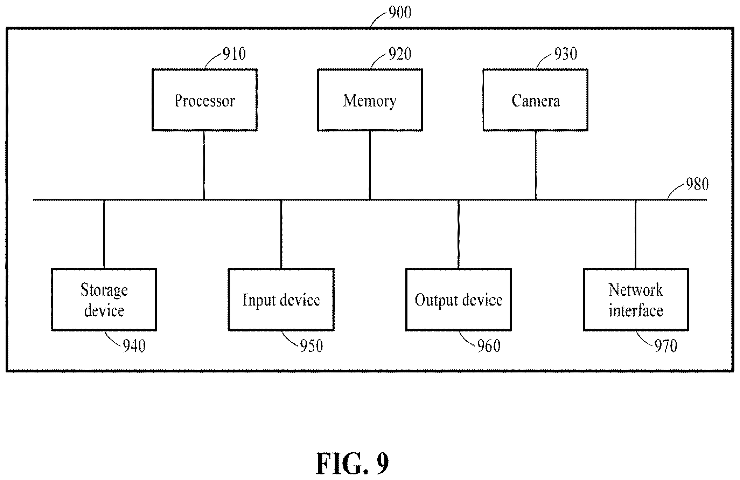

FIG. 9 illustrates an example configuration of an electronic device, according to one or more embodiments. Referring to FIG. 9, an electronic device 900 may include a processor 910, a memory 920, a camera 930, a storage device 940, an input device 950, an output device 960, and a network interface 970. The processor 910, the memory 920, the camera 930, the storage device 940, the input device 950, the output device 960, and the network interface 970 may communicate with each other via a communication bus 980. For example, the electronic device 900 may be embodied as at least a portion of a mobile device (e.g., a mobile phone, a smartphone, a personal digital assistant (PDA), a netbook, a tablet computer, a laptop computer, etc.), a wearable device (e.g., a smartwatch, a smart band, smart eyeglasses, etc.), a computing device (e.g., a desktop, a server, etc.), a home appliance (e.g., a television (TV), a smart TV, a refrigerator, etc.), a security device (e.g., a door lock, etc.), a vehicle (e.g., an autonomous vehicle, a smart vehicle, etc.), or an aerial vehicle (a drone). The electronic device 900 may perform the image enhancement task (e.g., deblurring) and/or the training task described above with reference to FIGS. 1 to 8.

The one or more processors 910 may execute instructions or functions to be executed in the electronic device 900. For example, the one or more processors 910 may process the instructions stored in the memory 920 or the storage device 940. The one or more processors 910 may perform the operations described above with reference to FIGS. 1 to 8. The memory 920 may include a non-transitory computer-readable storage medium or a non-transitory computer-readable storage device. The memory 920 may store instructions to be executed by the one or more processors 910 and may store related information while software and/or an application is being executed by the electronic device 900. For example, the memory 920 may store one or more of a neural kernel estimation model, a neural clustering model, and a neural converting model.

The camera 930 may capture a photo and/or a video. The photo and/or the video may serve as an input blur image, and a deblurring task may be performed on the input blur image. The storage device 940 may include a non-transitory computer-readable storage medium or a non-transitory computer-readable storage device. The storage device 940 may store a greater amount of information than the memory 920 and store the information for a long period of time. For example, the storage device 940 may include magnetic hard disks, optical disks, flash memories, floppy disks, or other forms of non-volatile memories known in the art (excluding signals per se).

The input device 950 may receive an input from a user through a traditional input scheme using a keyboard and a mouse, and through a new input scheme such as a touch input, a voice input, and an image input. For example, the input device 950 may detect an input from a keyboard, a mouse, a touchscreen, a microphone or a user, and may include any other device configured to transfer the detected input to the electronic device 900. The output device 960 may provide a user with an output of the electronic device 900 through a visual channel, an auditory channel, or a tactile channel. The output device 960 may include, for example, a display, a touchscreen, a speaker, a vibration generator, or any other device configured to provide a user with the output. The network interface 970 may communicate with an external device via a wired or wireless network.

The examples described herein may be implemented using a hardware component, a software component, and/or a combination thereof. A processing device may be implemented using one or more general-purpose or special-purpose computers, such as, for example, a processor, a controller, an arithmetic logic unit (ALU), a digital signal processor (DSP), a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The computing apparatuses, the electronic devices, the processors, the memories, the image sensors/cameras, the displays, the information output system and hardware, the storage devices, and other apparatuses, devices, units, modules, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Implementations of the present disclosure may relate to one of the enumerated example embodiments (EEEs) listed below.
EEE1. A method of image enhancement, the method comprising:
   generating a blur segmentation map comprising indications of blur characteristics of respective pixels of a blur image, wherein the blur characteristics are in predetermined blur characteristic categories, and wherein the generating is performed by classifying the blur characteristic of each pixel of the blur image into one of the predetermined blur characteristic categories;
   converting the blur segmentation map into an image residual error corresponding to a blur component of the blur image; and
   generating a deblurred image based on the blur image and the image residual error.
EEE2. The method of EEE 1, wherein the indications are feature representations and each feature representation represents the blur characteristic of a corresponding pixel of the blur image.
EEE3. The method of EEE 2, wherein
   the feature representations form pairs with positionally corresponding pixels of the blur image, and
   a first pair of the pairs comprises a first feature representation of the feature representations and a first pixel of the pixels, and the first feature representation represents a blur characteristic of the first pixel.
EEE4. The method of any of the preceding EEE's, wherein the image residual error is generated by performing a discrete-to-continuous conversion on the blur segmentation map based on the blur characteristic categories, the image residual error comprising pixel values in a continuous format.
EEE5. The method of any of the preceding EEE's, wherein
   the blur segmentation map is generated using a first neural model pre-trained to segment input blur images based on clustering of blur characteristics of the input blur images, and
   the blur segmentation map is converted into the image residual error using a second neural network that is pre-trained to convert segmentation maps into images with continuous pixel values.
EEE6. The method of EEE 5, wherein the converting of the blur segmentation map into the image residual error comprises inputting the blur image and the blur segmentation map into the second neural network.
EEE7. The method of EEE 5, wherein the first neural network model is trained based on:
   generating basis kernels of a first training blur image using a neural kernel estimation model;
   generating first intermediate deconvolution results by performing deconvolution of the first training blur image using the basis kernels;
   generating a first training blur segmentation map of the first sample blur image using the first neural network model;
   generating a first final deconvolution result by sampling pixels of the first final deconvolution result from the first intermediate deconvolution results using feature representations of the first sample blur segmentation map; and
   training the first neural network model and the second neural network model such that a difference between the first final deconvolution result and a first training sharp image is reduced.
EEE8. The method of EEE 7, wherein the number of the basis kernels is set to be the same as the number of the predetermined blur characteristic categories.
EEE9. The method of EEE 7 or 8, wherein the generating of the first final deconvolution result comprises:
   based on a feature representation at a first position among the feature representations of the first training blur segmentation map, determining a pixel value at a position of the first final deconvolution result corresponding to the first position by selecting one of pixel values at a position of the first intermediate deconvolution results corresponding to the first position.
EEE10. The method of any of EEE's 5-9, wherein the second neural network model is trained based on:
   generating a second training blur segmentation map of a second training blur image using the first neural network model after the training of the first neural network model is completed;
   converting the second training blur segmentation map into a training image residual error corresponding to a difference between the second training blur image and a second training deblurred image using the second neural network model;
   generating the second training deblurred image based on the second training blur image and the training image residual error; and
   training the second neural network model such that a difference between the second training deblurred image and a second training sharp image is reduced.
EEE 11. The method of EEE 10, wherein the training of the second neural network model comprises repeatedly updating weights of the second neural network model while no weights of the first neural network model are updated.
EEE 12. An electronic device comprising:
   one or more processors; and
   a memory storing instructions configured to cause the one or more processors to:
      generate a blur segmentation map from a blur image by classifying blur characteristics of pixels of the blur image into predetermined blur characteristic categories and storing, in the blur segmentation map, indications of the determined blur characteristic categories of the respective pixels of the blur image;
      generate an image residual error based on the blur segmentation map, the image residual error corresponding to a blur component of the blur image; and
   generate a deblurred image by applying the image residual error to the blur image to remove the blur component of the blur image.
EEE13. The electronic device of EEE 12, wherein the pixels of the blur image each have a frequency component and a motion component, and wherein the predetermined blur characteristic categories correspond to respective clusters of the pixels in a frequency-motion domain.
EEE14. The electronic device of EEE 13, wherein
   which predetermined blur characteristic category a pixel of the blur image is classified into depends on a motion component of the pixel and a blur component of the pixel.
EEE 15. The electronic device of EEE 12, 13 or 14, wherein the blur segmentation map is a discretization of frequency-motion values of pixel values in the blur image.
EEE16. The electronic device of any of EEE's 12-15, wherein the instructions are further configured to cause the one or more processors to:
   generate the blur segmentation map by inputting the blur image to a first neural network model that has been pre-trained to cluster pixels of the blur image according to frequency and motion components thereof, the first neural network model generating the blur segmentation map; and
   generate the image residual error by inputting the blur segmentation map to a second neural network model that has been pre-trained to convert segmentation maps of blur images into non-segmented image residual errors.
EEE 17. The electronic device of EEE 16, wherein the first neural network model is trained based on:
   generating basis kernels of a first training blur image using a third neural model trailed to estimate blur kernels of blur images;
   generating first intermediate deconvolution results by performing deconvolution of the first training blur image using the basis kernels;
   generating a first training blur segmentation map of the first training blur image using the first neural network model;
   generating a first final deconvolution result by sampling pixels of the first final deconvolution result from the first intermediate deconvolution results using frequency-motion feature indications of the first training blur segmentation map; and
   training the first neural network model and the third neural network model such that a difference between the first final deconvolution result and a first training sharp image is reduced.
EEE18. The electronic device of EEE 17, wherein the basis kernels respectively correspond to the predetermined blur characteristic categories.
EEE19. A method of generating a deblurred image from a blur image, the method performed by one or more processors, the method comprising:
   determining frequency-motion blur categories of pixels of the blur image according to frequency-motion blur components of the pixels of the blur image and storing indications of the determined frequency-motion blur categories in a blur segmentation map, wherein each indication in the blur segmentation map indicates the determined frequency-motion blur category of its positionally-corresponding pixel in the blur image; and
   generating the deblurred image based on the blur segmentation map.
EEE20. The method of EEE 19, wherein the frequency-motion blur categories are in a frequency-motion domain of the blur image, wherein the frequency-motion blur categories correspond to clusters of the pixels of the blur image in the frequency-motion domain, and wherein the method further comprises generating an image residual error corresponding to a blur component of the blur image and applying the image residual error to the blur image to generate the deblurred image.

Therefore, in addition to the above disclosure, the scope of the disclosure may also be defined by the claims, and all variations within the scope of the claims are to be construed as being included in the disclosure.

## Claims

1. A method of image enhancement, the method comprising:
generating a blur segmentation map comprising indications of blur characteristics of respective pixels of a blur image, wherein the blur characteristics are in predetermined blur characteristic categories, and wherein the generating is performed by classifying the blur characteristic of each pixel of the blur image into one of the predetermined blur characteristic categories;
converting the blur segmentation map into an image residual error corresponding to a blur component of the blur image; and
generating a deblurred image based on the blur image and the image residual error.

2. The method of claim 1, wherein the indications are feature representations and each feature representation represents the blur characteristic of a corresponding pixel of the blur image, wherein optionally:
the feature representations form pairs with positionally corresponding pixels of the blur image, and
a first pair of the pairs comprises a first feature representation of the feature representations and a first pixel of the pixels, and the first feature representation represents a blur characteristic of the first pixel.

3. The method of any one of claims 1-2, wherein the image residual error is generated by performing a discrete-to-continuous conversion on the blur segmentation map based on the blur characteristic categories, the image residual error comprising pixel values in a continuous format.

4. The method of any one of the preceding claims, wherein
the blur segmentation map is generated using a first neural network model pre-trained to segment input blur images based on clustering of blur characteristics of the input blur images, and
the blur segmentation map is converted into the image residual error using a second neural network that is pre-trained to convert segmentation maps into images with continuous pixel values.

5. The method of claim 4, wherein the converting of the blur segmentation map into the image residual error comprises inputting the blur image and the blur segmentation map into the second neural network.

6. The method of claim 4 or 5, wherein the first neural network model is trained based on:
generating basis kernels of a first training blur image using a neural kernel estimation model;
generating first intermediate deconvolution results by performing deconvolution of the first training blur image using the basis kernels;
generating a first training blur segmentation map of the first sample blur image using the first neural network model;
generating a first final deconvolution result by sampling pixels of the first final deconvolution result from the first intermediate deconvolution results using feature representations of the first sample blur segmentation map; and
training the first neural network model and the second neural network model such that a difference between the first final deconvolution result and a first training sharp image is reduced.

7. The method of claim 6, wherein the number of the basis kernels is set to be the same as the number of the predetermined blur characteristic categories.

8. The method of claim 6 or 7, wherein the generating of the first final deconvolution result comprises:
based on a feature representation at a first position among the feature representations of the first training blur segmentation map, determining a pixel value at a position of the first final deconvolution result corresponding to the first position by selecting one of pixel values at a position of the first intermediate deconvolution results corresponding to the first position.

9. The method of any one of claims 4-8, wherein the second neural network model is trained based on:
generating a second training blur segmentation map of a second training blur image using the first neural network model after the training of the first neural network model is completed;
converting the second training blur segmentation map into a training image residual error corresponding to a difference between the second training blur image and a second training deblurred image using the second neural network model;
generating the second training deblurred image based on the second training blur image and the training image residual error; and
training the second neural network model such that a difference between the second training deblurred image and a second training sharp image is reduced.

10. The method of claim 9, wherein the training of the second neural network model comprises repeatedly updating weights of the second neural network model while no weights of the first neural network model are updated.

11. An electronic device comprising:
one or more processors; and
a memory storing instructions configured to cause the one or more processors to:
generate a blur segmentation map from a blur image by classifying blur characteristics of pixels of the blur image into predetermined blur characteristic categories and storing, in the blur segmentation map, indications of the determined blur characteristic categories of the respective pixels of the blur image;
generate an image residual error based on the blur segmentation map, the image residual error corresponding to a blur component of the blur image; and
generate a deblurred image by applying the image residual error to the blur image to remove the blur component of the blur image.

12. The electronic device of claim 11, wherein the pixels of the blur image each have a frequency component and a motion component, and wherein the predetermined blur characteristic categories correspond to respective clusters of the pixels in a frequency-motion domain.

13. The electronic device of claim 12, wherein
which predetermined blur characteristic category a pixel of the blur image is classified into depends on a motion component of the pixel and a blur component of the pixel, and/or
wherein the blur segmentation map is a discretization of frequency-motion values of pixel values in the blur image, and/or
wherein the instructions are further configured to cause the one or more processors to:
generate the blur segmentation map by inputting the blur image to a first neural network model that has been pre-trained to cluster pixels of the blur image according to frequency and motion components thereof, the first neural network model generating the blur segmentation map; and
generate the image residual error by inputting the blur segmentation map to a second neural network model that has been pre-trained to convert segmentation maps of blur images into non-segmented image residual errors.

14. The electronic device of claim 13, wherein the first neural network model is trained based on:
generating basis kernels of a first training blur image using a third neural model trailed to estimate blur kernels of blur images;
generating first intermediate deconvolution results by performing deconvolution of the first training blur image using the basis kernels;
generating a first training blur segmentation map of the first training blur image using the first neural network model;
generating a first final deconvolution result by sampling pixels of the first final deconvolution result from the first intermediate deconvolution results using frequency-motion feature indications of the first training blur segmentation map; and
training the first neural network model and the third neural network model such that a difference between the first final deconvolution result and a first training sharp image is reduced,
wherein the basis kernels preferably respectively correspond to the predetermined blur characteristic categories.

15. An electronic device, for instance an electronic device as claimed in any of claims 11-14, the electronic device comprising:
one or more processors; and
a memory storing instructions configured to cause the one or more processors to perform the method according to any of clams 1-10.
